# EUROPEAN PATENT SPECIFICATION

(11) **EP 4 449 763 B1**
(45) Date of publication and mention of the grant of the patent: **19.08.2026**
(21) Application number: 22921034.9
(22) Date of filing: 18.01.2022
(51) Int. Cl.: H04B 7/06, H04W 16/28, H04L 5/00, H04W 56/00

(54) **SYSTEMS AND METHODS FOR CONSERVING NETWORK POWER WITH A BEAM PATTERN UPDATE FOR TRANSMITTED SYNCHRONIZATION SIGNAL BLOCKS**
SYSTEME UND VERFAHREN ZUR KONSERVIERUNG DER NETZWERKLEISTUNG MIT STRAHLMUSTERAKTUALISIERUNG FÜR ÜBERTRAGENE SYNCHRONISATIONSSIGNALBLÖCKE
SYSTÈMES ET PROCÉDÉS POUR CONSERVER UNE PUISSANCE DE RÉSEAU AVEC UNE MISE À JOUR DE MOTIF DE FAISCEAU POUR DES BLOCS DE SIGNAL DE SYNCHRONISATION TRANSMIS

(43) Date of publication of application: 23.10.2024
(73) Proprietor: Apple Inc., Cupertino, CA 95014 (US)
(72) Inventor: ZENG, Wei, Cupertino, California 95014 (US); SUN, Haitong, Cupertino, California 95014 (US); ZHANG, Dawei, Cupertino, California 95014 (US); CUI, Jie, Cupertino, California 95014 (US); YE, Sigen, San Diego, California 92131 (US); NIU, Huaning, Cupertino, California 95014 (US); LI, Qiming, Beijing 100022 (CN); ZHANG, Yushu, Beijing 100022 (CN)
(74) Representative: Rooney, John-Paul
(86) International application number: PCT/CN2022/072518
(87) International publication number: WO 2023/137584

(56) References cited:
- WO-A1-2021/068161
- WO-A1-2021/082732
- CN-A- 110 720 242
- CN-A- 111 373 667
- CN-A- 112 752 274
- US-A1- 2020 068 644
- US-A1- 2020 077 285
- US-A1- 2020 275 493
- US-A1- 2021 336 687
- US-A1- 2021 337 487
- US-A1- 2022 256 360
- APPLE INC: "On Beam Management Enhancement", vol. RAN WG1, no. e-Meeting; 20210125 - 20210205, 18 January 2021 (2021-01-18), XP051970738, Retrieved from the Internet <URL:https://ftp.3gpp.org/tsg_ran/WG1_RL1/TSGR1_104-e/Docs/R1-2101350.zip R1-2101350 On Beam Management Enhancement.docx> [retrieved on 20210118]

## Description

### TECHNICAL FIELD

This application relates generally to wireless communication systems, including methods and implementations of transmitting synchronization signal blocks (SSBs) on a set of beams.

### BACKGROUND

Wireless mobile communication technology uses various standards and protocols to transmit data between a base station and a wireless communication device. Wireless communication system standards and protocols can include, for example, 3rd Generation Partnership Project (3GPP) long term evolution (LTE) (e.g., 4G), 3GPP new radio (NR) (e.g., 5G), and IEEE 802.11 standard for wireless local area networks (WLAN) (commonly known to industry groups as Wi-Fi^{®}).

As contemplated by the 3GPP, different wireless communication systems standards and protocols can use various radio access networks (RANs) for communicating between a base station of the RAN (which may also sometimes be referred to generally as a RAN node, a network node, or simply a node) and a wireless communication device known as a user equipment (UE). 3GPP RANs can include, for example, global system for mobile communications (GSM), enhanced data rates for GSM evolution (EDGE) RAN (GERAN), Universal Terrestrial Radio Access Network (UTRAN), Evolved Universal Terrestrial Radio Access Network (E-UTRAN), and/or Next-Generation Radio Access Network (NG-RAN).

Each RAN may use one or more radio access technologies (RATs) to perform communication between the base station and the UE. For example, the GERAN implements GSM and/or EDGE RAT, the UTRAN implements universal mobile telecommunication system (UMTS) RAT or other 3GPP RAT, the E-UTRAN implements LTE RAT (sometimes simply referred to as LTE), and NG-RAN implements NR RAT (sometimes referred to herein as 5G RAT, 5G NR RAT, or simply NR). In certain deployments, the E-UTRAN may also implement NR RAT. In certain deployments, NG-RAN may also implement LTE RAT.

A base station used by a RAN may correspond to that RAN. One example of an E-UTRAN base station is an Evolved Universal Terrestrial Radio Access Network (E-UTRAN) Node B (also commonly denoted as evolved Node B, enhanced Node B, eNodeB, or eNB). One example of an NG-RAN base station is a next generation Node B (also sometimes referred to as a g Node B or gNB).

A RAN provides its communication services with external entities through its connection to a core network (CN). For example, E-UTRAN may utilize an Evolved Packet Core (EPC), while NG-RAN may utilize a 5G Core Network (5GC).

The following documents may be relevant to an understanding of the invention: patent publications US 2021/336687 A1, WO 2021/082732 A1, WO 2021/068161 A1, US 2020/275493 A1, 3GGP Draft R1-2101350 XP051970738, and US 2021/337487 A1.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 shows an example of a wireless communications system including a base station and a set of UEs.
FIG. 2 shows a first example beam pattern that may be used by a base station to transmit SSBs, and a corresponding coverage area for SSB transmission.
FIG. 3 shows the beam pattern described with reference to FIG. 2, but shows SSBs being transmitted on only some of the beams in the beam pattern.
FIG. 4 shows a second example beam pattern that may be used by a base station to transmit SSBs, and a corresponding coverage area for SSB transmission.
FIG. 5 shows an example method of a base station, which method may be used to conserve power at the base station.
FIG. 6A shows a first example MAC CE format for signaling a change in beam pattern for transmitted SSBs.
FIG. 6B shows a second example MAC CE format for signaling a change in beam pattern for transmitted SSBs.
FIG. 7 shows an example spatial correlation between a full or larger set of beams (before a beam pattern change) and a smaller set of beams (after a beam pattern change).
FIG. 8 shows an example method of a UE, which method may be used to receive a set of SSBs at the UE.
FIG. 9 illustrates an example architecture of a wireless communication system, according to embodiments disclosed herein.
FIG. 10 illustrates a system for performing signaling between a wireless device and a network device, according to embodiments disclosed herein.

### DETAILED DESCRIPTION

There is provided an apparatus according to the appended claims.

Various embodiments are described with regard to a UE. However, reference to a UE is merely provided for illustrative purposes. The example embodiments may be utilized with any electronic component that may establish a connection to a network and is configured with the hardware, software, and/or firmware to exchange information and data with a network. Therefore, the UE as described herein is used to represent any appropriate electronic device.

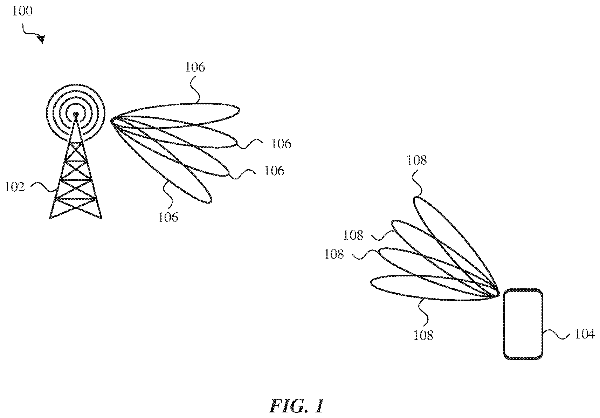

FIG. 1 shows an example of a wireless communications system 100 including a base station 102 and a set of UEs 104. As an example, the base station 102 may be a gNB. The base station may broadcast information and/or communicate with particular UEs 104 on a set of downlink (DL) beams 106. Each UE 104 may communicate with the base station 102 and/or other base stations (e.g., base stations of neighbor cells) on a set of uplink (UL) beams 108. To improve the link budget, the base station 102 may transmit form the DL beams 106, and a UE 104 may form its UL beams 108, using analog beamforming.

Transmissions between the base station 102 and a UE 104 may be made on a base station-UE beam pair. The base station-UE beam pair may be selected based on measurements performed by the UE on one or more DL beams. For example, the base station 102 may transmit an SSB burst including a set of SSBs. The set of SSBs may be transmitted on a set of beam, with different SSBs being transmitted on different beams. A UE 104 may receive some or all of the SSBs, perform measurements (e.g., beam quality measurements) on the SSBs during an UL beam sweep performed by the UE 104, and transmit the measurements to the base station 102. In some cases, the UE 104 may identify one or more preferred beams 108 to the base station 102. The base station 102 may then select one or more base station-UE beam pairs (i.e., DL-UL beam pairs) for communications with the UE 104, and signal the DL-UL beam pairs to the UE 104.

Conventionally, a set of SSBs is transmitted in accord with a beam pattern, and the beam pattern cannot be changed. One SSB is transmitted on one beam.

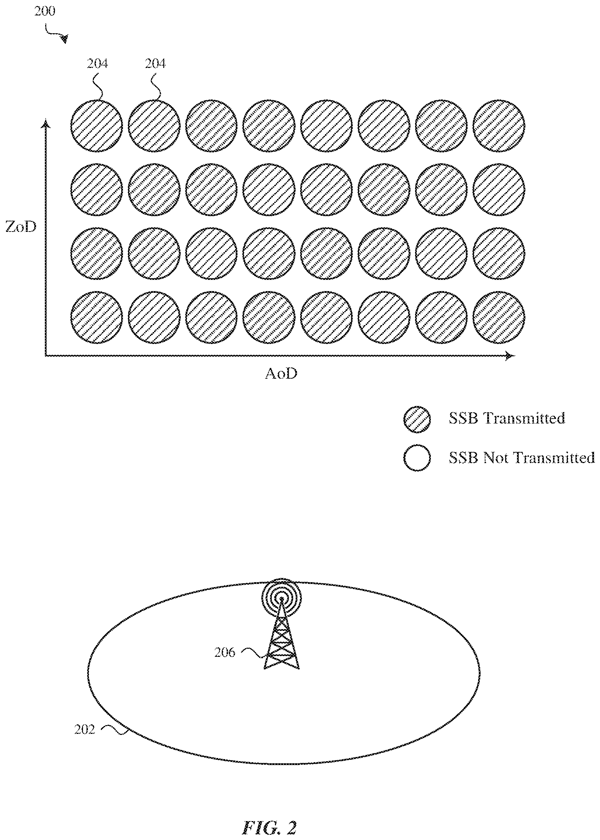

FIG. 2 shows a first example beam pattern 200 that may be used by a base station 206 to transmit SSBs, and a corresponding coverage area 202 for SSB transmission. In some embodiments, the beam pattern 200 may be used by the base station described with reference to FIG. 1 to transmit a set of SSBs.

By way of example, the beam pattern 200 includes 32 beams 204, with each beam 204 having an azimuth angle of departure (AoD) and a zenith angle of departure (ZoD). Different beams 204 may be associated with different combinations of AoD and ZoD. The beams 204 may define a relatively uniform coverage area 202 for a base station (or cell).

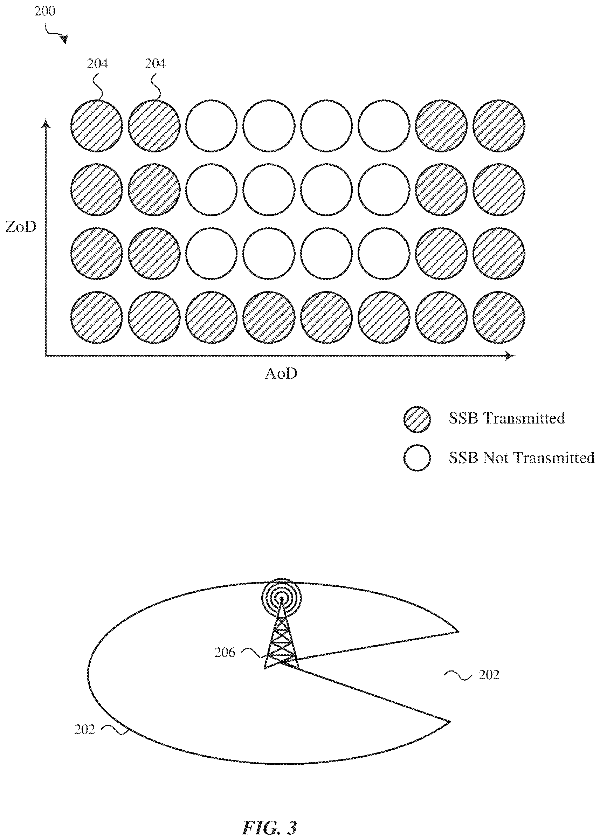

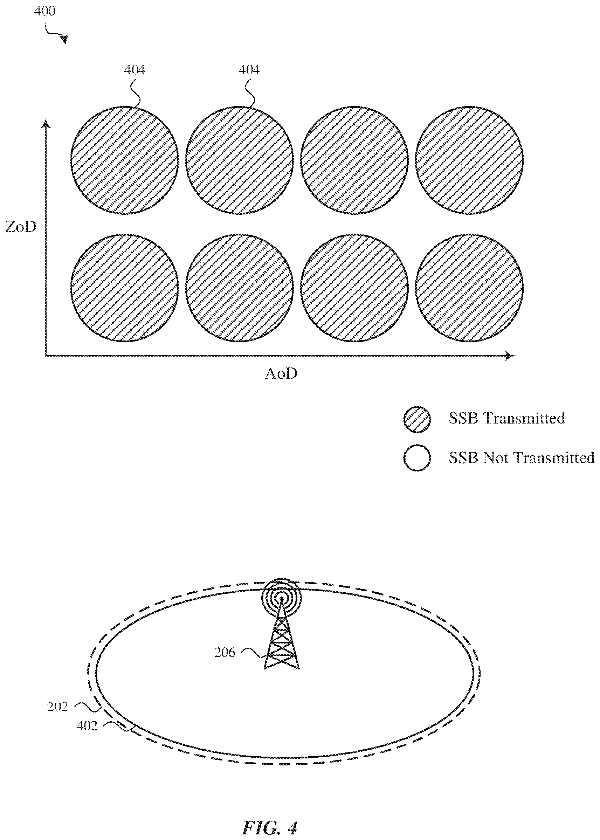

Transmitting a full set of SSBs (e.g., 32 SSBs) can consume a lot of power on the network side. When the load on a cell is reduced (or small), it may be useful to transmit fewer than a full set of SSBs, as shown in FIG. 3 or 4. A base station (or network) may therefore decide to transmit a subset of SSBs, and signal a subset of actually transmitted SSBs in a system information block (SIB).

FIG. 3 shows the beam pattern 200 described with reference to FIG. 2, but shows SSBs being transmitted on only some of the beams 204 in the beam pattern 200. In other words, some of the SSB (e.g., 12 of the SSBs) are turned OFF. The SSBs that are turned ON or OFF may be signaled in a SIB.

Although transmitting fewer SSBs may conserve power on the network side, transmitting SSBs on only a subset of the beams 204 in the beam pattern 200 leads to coverage holes 302 (i.e., holes in the coverage area 202 for SSB transmission). Although a network may turn OFF SSB transmission for sectors where the network believes there are no LTEs, the network may not know where idle mode UEs are, and these UEs could be in a coverage hole 302.

FIG. 4 shows a second example beam pattern 400 that may be used by a base station 206 to transmit SSBs, and a corresponding coverage area 402 for SSB transmission. In some embodiments, the beam pattern 400 may be used by the base station described with reference to FIG. 1 to transmit a set of SSBs.

By way of example, the beam pattern 400 includes eight beams 404, with each beam 404 having an AoD and a ZoD. Different beams 404 may be associated with different combinations of AoD and ZoD. The beams 404 may define a relatively uniform coverage area 402 for a base station (or cell).

The beam pattern 400 may be used to transmit eight SSBs. Assuming a full set of 32 SSBs, 24 SSBs may be turned OFF when transmitting SSBs in accord with the beam pattern 400. The SSBs that are turned ON or OFF may be signaled in a SIB.

In contrast to what is shown in FIG. 3, where only a subset of SSBs is transmitted but the underlying beam pattern remains the same, FIG. 4 shows the transmission of a subset of SSBs on a new (or changed) beam pattern. To avoid or mitigate coverage holes, a base station may transmit wider beams when transmitting beams according to the beam pattern 400. For example, if a base station is capable of transmitting relatively more beams in accord with the beam pattern shown in FIG. 2 or 3, or relatively fewer beams in accord with the beam pattern 400, the base station may transmit wider beams when transmitting the beam pattern 400 (i.e., wider beams in comparison to the beams transmitted in accord with the beam pattern shown in FIG. 2 or 3).

Assuming an overall fixed transmit power, the coverage area 402 may be smaller than the coverage area 202 for the beam pattern described with reference to FIG. 2 or 3 (e.g., due to each of the wider beams 404 having a lower peak power in a particular direction). However, given the overlap between cells, the coverage area 402 may still be sufficient, and the coverage area 402 will typically be better than the coverage area with holes shown in FIG. 3 (i.e., better than the coverage area provided when a subset of SSBs is transmitted without a beam pattern change).

To maintain the same link budget as in FIG. 2, a UE that is operating within the cell defined by the coverage area 402 may use a narrower beam (or beams) to track the fewer number of SSBs transmitted in accord with the beam pattern 400. The use of narrower beams can help compensate for the beamforming gain loss when the base station 206 uses wider beams.

A beam pattern for transmitted SSBs may be changed for a serving cell and/or a neighbor cell, and a UE configured for inter-cell multi-transmission reception point (multi-TRP) or inter-cell beam management may be configured to perform an UL beam sweep to find (or track) SSBs in both a serving cell and one or more neighbor cells.

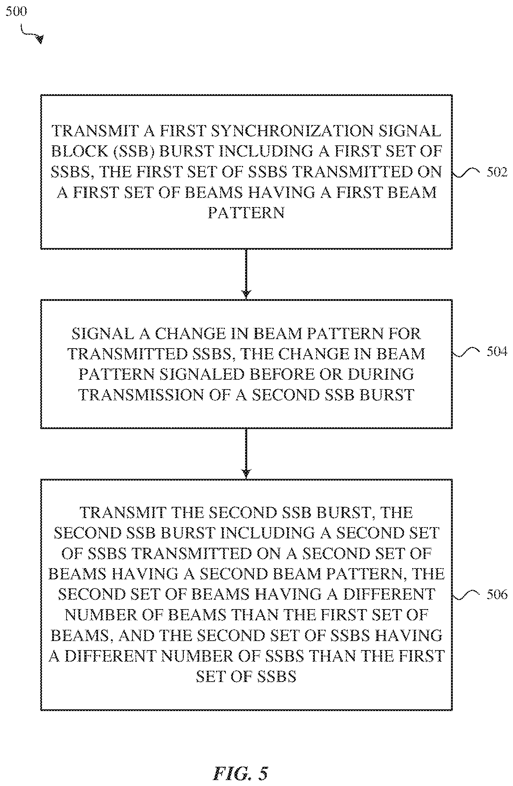

FIG. 5 shows an example method 500 of a base station, according to the claimed invention, which method 500 may be used to conserve power at the base station. In some embodiments, the base station may be the base station described with reference to FIG. 1.

At 502, the method 500 includes transmitting a first SSB burst including a first set of SSBs. The first set of SSBs is transmitted on a first set of beams having a first beam pattern. In one example, the first set of beams may have the beam pattern shown in FIG. 2.

At 504, the method 500 includes signaling a change in beam pattern for transmitted SSBs. The change in beam pattern is signaled before or during transmission of a second SSB burst. For example, the beam pattern change may be signaled in RRC signaling, a medium access control (MAC) control element (CE), or downlink control information (DCI), or the beam pattern change may be signaled by a change in the actually transmitted SSBs within an SSB burst.

At 506, the method 500 includes transmitting the second SSB burst. The second SSB burst includes a second set of SSBs transmitted on a second set of beams having a second beam pattern. The second set of beams has a different number of beams than the first set of beams, and the second set of SSBs has a different number of SSBs than the first set of SSBs.

The change in beam pattern for transmitted SSBs may be signaled, at 504, in various ways. In some embodiments, the beam pattern change may be signaled by a change in the actually transmitted SSBs within an SSB burst. In these embodiments, a UE can assume that a beam pattern for transmitted SSBs has changed when the actually transmitted SSBs (e.g., the SSB pattern within an SSB burst) has changed. In these embodiments, the method 500 may include signaling the change in beam pattern by signaling, in a SIB or in dedicated RRC signaling, a new SSB pattern within an SSB burst.

In other embodiments, the method 500 may include signaling the change in beam pattern for transmitted SSBs in a SIB or in dedicated RRC signaling. In these embodiments, the change in beam pattern may be indicated by a single bit or field. The single bit or field may indicate whether the beams for all SSBs or any of the SSBs has changed. In some cases, the change in beam pattern may be indicated by a bitmap. The bitmap may include a bit per SSB in a set of multiple SSB. Each bit may indicate whether a beam has changed for a corresponding SSB.

In other embodiments, the method 500 may include signaling the change in beam pattern for transmitted SSBs in a MAC CE. In these embodiments, the change in beam pattern may be indicated across all SSBs (e.g., in a single bit or field), or per SSB in a set of multiple SSBs (e.g., in a bitmap). A bitmap may include a bit per SSB in a set of multiple SSB, with each bit indicating whether a beam has changed for a corresponding SSB. In some embodiments, the MAC CE may also include a per SSB transmission status (e.g., an ON/OFF status for each SSB in a full set of SSBs).

In some embodiments, the method 500 may include signaling the change in beam pattern for transmitted SSBs in group-cast DCI. In these embodiments, the group-cast DCI may be associated with an SSB radio network temporary identifier (SSB-RNTI), and a value for the SSB-RNTI may be predefined or configured by RRC signaling. The group-cast DCI may indicate the beam change status across all SSB (e.g., in a single bit or field), or per SSB in a set of multiple SSBs (e.g., in a bitmap). The bitmap may include a bit per SSB in a set of multiple SSBs, with each bit indicating whether a beam has changed for a corresponding SSB. In some cases, the group-cast DCI may include a per SSB transmission status (e.g., an ON/OFF status for each SSB in a full set of SSBs).

In a variation of the method 500, and to support cross-cell indication of changes in beam patterns, the base station may alternatively or additionally signal a change in beam pattern for a neighbor cell at 504 and, at 506, the base station may transmit the first set of SSBs on the first set of beams during the second SSB burst. In these embodiments, the neighbor cell may implement the change in beam pattern for its own SSB transmissions. Also in these embodiments, the method 500 may include indicating a cell that is associated with a change in beam pattern signaled at 504. In some cases, the indication may include a serving cell index for a cell to which the change in beam pattern applies. The serving cell index or other indication may be signaled, for example, along with the signaling of the change in beam pattern (e.g., in the SIB, RRC signaling, MAC CE, or DCI described in the preceding paragraphs). Cross-cell indications of changes in beam patterns can be useful for inter-cell multi-TRP configurations and inter-cell beam management.

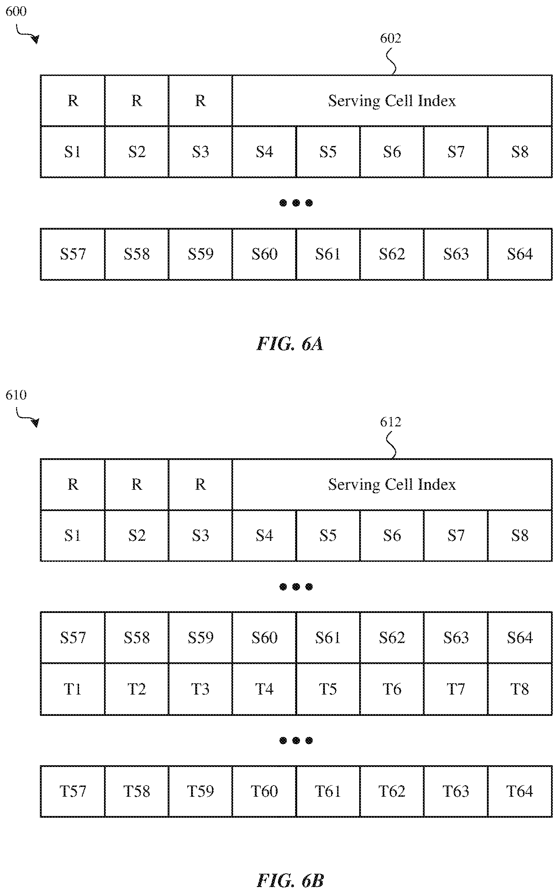

By way of example, FIG. 6A shows a first example MAC CE format 600 for signaling a change in beam pattern for transmitted SSBs. The MAC CE format 600 includes a serving cell index 602, indicating the cell to which the change in beam pattern applies, and a bit per SSB (i.e., bits S1-S64) indicating whether a beam has changed for a corresponding SSB. Other bits (R bits) may be reserved for other or possible future purposes.

As another example, FIG. 6B shows a second example MAC CE format 610 for signaling a change in beam pattern for transmitted SSBs. The MAC CE format 610 includes a serving cell index 612, indicating the cell to which the change in beam pattern applies; a bit per SSB (i.e., bits S1-S64) indicating whether a beam has changed for a corresponding SSB; and a bit per SSB (bits T1-T64) indicating a transmission status of the SSB (e.g., whether the SSB is transmitted or not transmitted). Other bits (R bits) may be reserved for other or possible future purposes.

When the change in beam pattern is signaled, at 504, before transmission of the second SSB burst at 506, an action delay for the change in beam pattern may be defined in various ways. In some embodiments, the action delay may be predefined. For example, the action delay may be predefined as a next frame, or a next SSB burst, after the change in beam pattern for transmitted SSBs is signaled. The change in beam pattern may therefore be applied at the next frame or next SSB burst. As another example, the action delay can be predefined as the action delay for a SIB update, which is at the next system information (SI) modification period. The SI modification period can be configured by SI (for the serving cell) or by higher layer signaling, such as RRC signaling (for a neighbor cell).

In other embodiments, the method 500 may include configuring an action delay for the change in beam pattern, and signaling the action delay in RRC signaling, a MAC CE, or DCI. When the action delay is signaled by MAC CE, it may be signaled in the same MAC CE that is used to signal the change in beam pattern for transmitted SSBs. When the action delay is signaled by DCI, it may be signaled along with the change in beam pattern, in the group-cast DCI referenced herein.

In some cases, the method 500 may include receiving UE capability information from each of one or more UEs, and configuring the action delay in response to the received UE capability information. The UE capability information may indicate, for each of the one or more UEs, a minimum action delay (e.g., a minimum delay that the UE requires before it can apply the change in beam pattern for transmitted SSBs).

The action delay for applying the change in beam pattern signaled at 504 may be indicated, for example, in terms of a number of frames, subframes, milliseconds, symbols, or SSB bursts.

In some cases, a change in beam pattern may affect an SSB that is provided as or quasi-co-located (QCLed) with the source reference signal in an active transmission configuration indicator (TCI) state, or an SSB that is provided for radio link monitoring (RLM), beam failure detection (BFD), or pathloss measurement. Stated differently, the change in beam pattern may affect an SSB that is being actively used by one or more UEs. In these cases, and according to the claimed invetion, the method 500 includes triggering (transmitting) one or more sets of aperiodic channel state information reference signal (CSI-RS) QCLed with an SSB in the second set of SSBs. The sets of aperiodic CSI-RS may enable a faster response time by a UE, since the periodicity of SSB bursts is fixed. Different sets of aperiodic CSI-RS may be triggered for different purposes. For example, a first set of aperiodic CSI-RS may be triggered for fast time/frequency offset tracking by one or more UEs. This first set may be configured with tracking reference signal information (TRS-info). A second set of aperiodic CSI-RS may be triggered for fast UE beam tracking (or more generally, beam management). This second set may be configured with repetition ON (i.e., repetition=on). A third set of aperiodic CSI-RS may be triggered for fast pathloss measurement (e.g., for UL power control). A new RRC parameter may be used to indicate usage of this third set. The aperiodic CSI-RS sets (i.e., resource sets) may be triggered by the same signaling used to signal a change of beam pattern for transmitted SSBs, or in a separate signaling.

To speed up a UE's beam tracking for the second set of beams on which the second set of SSBs is transmitted at 506, the method 500 may include signaling a spatial correlation between a first one or more beams in the first set of beams and a second one or more beams in the second set of beams (e.g., between a first beam in the first set of beams and a second beam in the second set of beams). The spatial correlation may be signaled as a reference QCL for a new beam in the second set of beams, and a source reference signal for the reference QCL may be an SSB transmitted on an old beam in the first set of beams. The spatial correlation may be signaled along with the signaling of the change in beam pattern (e.g., in shared RRC signaling, a MAC CE, or DCI), or in signaling that is separate from the signaling of the change in beam pattern (e.g., separate RRC signaling, a separate MAC CE, or separate DCI). In one example, the spatial correlation may be signaled in a MAC CE such as the MAC CE described with reference to FIG. 6A or 6B, and the MAC CE can be modified to include an N-bit field per SSB in the first set of SSBs (or old set of SSBs, or full set of SSBs), where N = ceil(log2(N_SSB)), "ceil" is a ceiling function, and N_SSB is the maximum number of SSBs (i.e., the number of SSBs in the full set of SSBs, or the largest number of SSBs between the first set of SSBs and the second set of SSBs). The value of an N-bit field may be a number of a new SSB that is spatially correlated with an old SSB or, alternatively, a number of an old SSB that is spatially correlated with a new SSB.

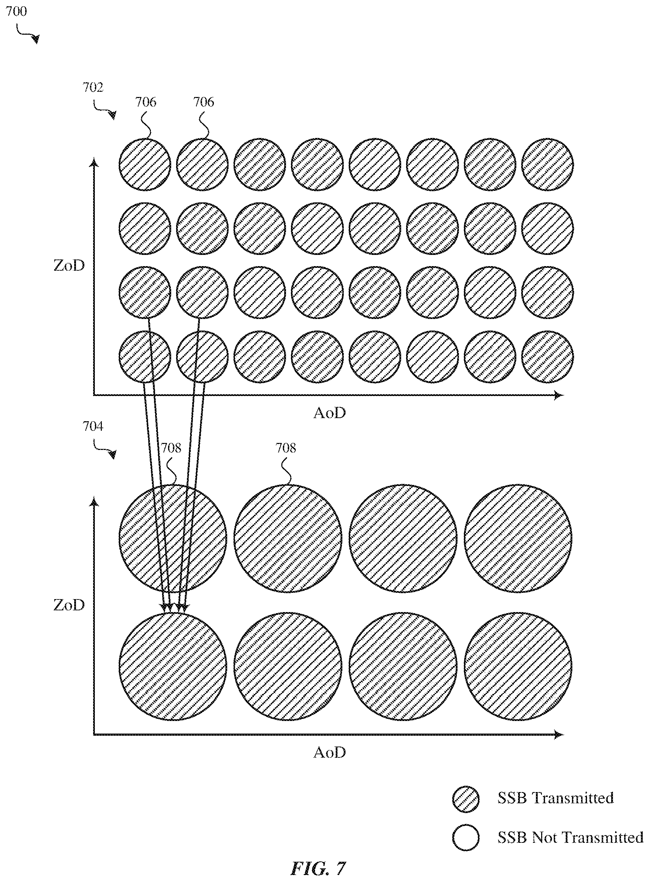

FIG. 7 shows an example spatial correlation 700 between a full or larger set of beams 702 (before a beam pattern change) and a smaller set of beams 704 (after a beam pattern change). As shown, four of the beams 706 in the full or larger set of beams 702 may be spatially correlated with a single beam 708 in the smaller set of beams 704.

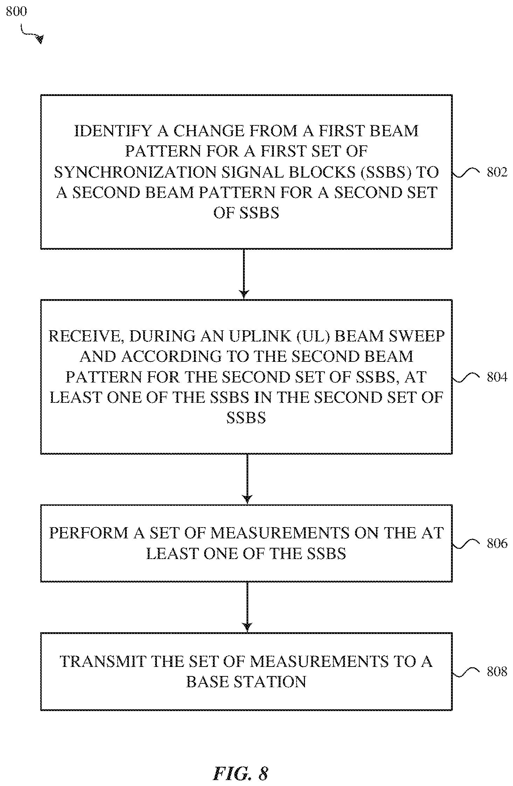

FIG. 8 shows an example method 800 of a UE, which method 800 may be used to receive a set of SSBs at the UE. In some embodiments, the UE may be the UE described with reference to FIG. 1.

At 802, the method 800 may include identifying a change from a first beam pattern for a first set of SSBs to a second beam pattern for a second set of SSBs.

At 804, the method 800 may include receiving, during an UL beam sweep and according to the second beam pattern for the second set of SSBs, at least one of the SSBs in the second set of SSBs.

At 806, the method 800 may include performing a set of measurements on the second set of SSBs.

At 808, the method 800 may include transmitting the set of measurements to a base station.

The change in beam pattern for transmitted SSBs may be identified from any of the signaling types described with reference to FIG. 5, 6A, or 6B. The action delay for the change in beam pattern may also be determined as described with reference to FIG. 5. In some cases, the UE may receive and use aperiodic CSI-RS, as described with reference to FIG. 5. In some cases, the UE may receive and use spatial correlation information, as described with reference to FIG. 5 or 7.

When the change in beam pattern identified at 802 indicates a change to wider beams, the method 800 may in some cases include, in response to identifying the change from the first beam pattern to the second beam pattern, configuring a set of beams used in the UL beam sweep to include a greater number of narrower beams. Use of the narrower beams can compensate for any potential coverage area loss (e.g., coverage area contraction) resulting from a base station's change to using wider beams.

In some embodiments, the method 800 may include transmitting, to the base station, UE capability information including a second number of UE beams (or an additional number of UE beams) for tracking the second set of SSBs. In these embodiments, the method 800 may also include receiving, from the base station, an indication of whether to track the second set of SSBs using 1) the second or additional number of UE beams, or 2) a first number of UE beams used to track the first set of SSBs. The indication of the second or additional number of UE beams, in UE capability information, may be used by the base station to determine the number of SSB measurements that the UE needs to perform for SSB beam tracking, which can influence the minimum TCI activation delay needed by the UE, the time needed by the UE to perform beam failure detection (BFD), the time needed by the UE to perform radio link monitoring (RLM), and so on. In alternative embodiments, the second number of UE beams can be predefined (e.g., 16 beams). Currently, a UE is assumed to use 8 beams in an UL beam sweep performed for SSB tracking. The indication of whether to track the second set of SSBs using the second or additional number of UE beams, or the first number of UE beams, can be provided in RRC signaling, a MAC CE, or DCI - with, or separate from, the signaling of the change in beam pattern for transmitted SSBs.

After a change in beam pattern for transmitted SSBs is applied, the method 500 may include resetting the corresponding counter for BFD/RLM if the SSB that was being used by the UE for BFD/RLM, or for CSI-RS QCLed with an SSB, is affected by the change in beam pattern. For a TCI activation delay after a change in beam pattern, the TCI activation delay may be counted starting from the first measurement of a new SSB (if the source reference signal in a TCI state is an old SSB or QCLed with an old SSB).

When a CSI-RS is monitored by the UE and an SSB in the first set of SSBs is configured as the QCL source, and in some embodiments, the method 500 may include, in response to identifying the change from the first beam pattern to the second beam pattern, automatically updating QCL information for the CSI-RS based on a spatial correlation between a first beam in the first beam pattern and a second beam in the second beam pattern. The spatial correlation may be determined based on any of the spatial information described with reference to FIG. 5. In some embodiments, the UE may receive signaling, from the base station, indicating whether the UE is to automatically apply a QCL update or not.

When a CSI-RS is monitored by the UE and an SSB in the first set of SSBs is configured as the QCL source, and in some embodiments, the method 500 may include receiving, from the base station, a QCL update or a transmission status for the CSI-RS. For periodic CSI-RS, the QCL update or transmission status may be signaled, by the base station, in a lower layer signaling such as DCI or a MAC CE. For periodic CSI-RS, the UE does not need to measure periodic CSI-RS with an invalid SSB (i.e., an SSB that is not transmitted) as a QCL source, and the periodic CSI-RS can be assumed to be turned OFF. Alternatively, a periodic CSI-RS resource or resource set can be turned ON or OFF based on signaling in DCI or a MAC CE.

For semi-persistent or aperiodic CSI-RS, the UE can assume that aperiodic CSI-RS with an invalid SSB as a QCL source is turned OFF.

Automatic turn ON and turn OFF of CSI-RS can be applied, for example, X symbols or milliseconds (ms) after the UE receives a signaling of a change in beam pattern for transmitted SSBs. The value of X may be predefined (e.g., X=0, or X=28 symbols, or X=3 ms), or may be configured by higher layer signaling (e.g., RRC signaling) based on UE capability.

Embodiments contemplated herein include an apparatus having means to perform one or more elements of the method 500 or 800. In the context of method 500, the apparatus may be, for example, an apparatus of a base station (such as a network device 1020 that is a base station, as described herein). In the context of method 800, the apparatus may be, for example, an apparatus of a UE (such as a wireless device 1002 that is a UE, as described herein).

Embodiments contemplated herein include one or more non-transitory computer-readable media storing instructions to cause an electronic device, upon execution of the instructions by one or more processors of the electronic device, to perform one or more elements of the method 500 or 800. In the context of method 500, the non-transitory computer-readable media may be, for example, a memory of a base station (such as a memory 1024 of a network device 1020 that is a base station, as described herein). In the context of method 800, the non-transitory computer-readable media may be, for example, a memory of a UE (such as a memory 1006 of a wireless device 1002 that is a UE, as described herein).

Embodiments contemplated herein include an apparatus having logic, modules, or circuitry to perform one or more elements of the method 500 or 800. In the context of method 500, the apparatus may be, for example, an apparatus of a base station (such as a network device 1020 that is a base station, as described herein). In the context of method 800, the apparatus may be, for example, an apparatus of a UE (such as a wireless device 1002 that is a UE, as described herein).

Embodiments contemplated herein include an apparatus having one or more processors and one or more computer-readable media, using or storing instructions that, when executed by the one or more processors, cause the one or more processors to perform one or more elements of the method 500 or 800. In the context of the method 500, the apparatus may be, for example, an apparatus of a base station (such as a network device 1020 that is a base station, as described herein). In the context of method 800, the apparatus may be, for example, an apparatus of a UE (such as a wireless device 1002 that is a UE, as described herein).

Embodiments contemplated herein include a signal as described in or related to one or more elements of the method 500 or 800.

Embodiments contemplated herein include a computer program or computer program product having instructions, wherein execution of the program by a processor causes the processor to carry out one or more elements of the method 500 or 800. In the context of method 500, the processor may be a processor of a base station (such as a processor(s) 1022 of a network device 1020 that is a base station, as described herein), and the instructions may be, for example, located in the processor and/or on a memory of the base station (such as a memory 1024 of a network device 1020 that is a base station, as described herein). In the context of method 800, the processor may be a processor of a UE (such as a processor(s) 1004 of a wireless device 1002 that is a UE, as described herein), and the instructions may be, for example, located in the processor and/or on a memory of the UE (such as a memory 1006 of a wireless device 1002 that is a UE, as described herein).

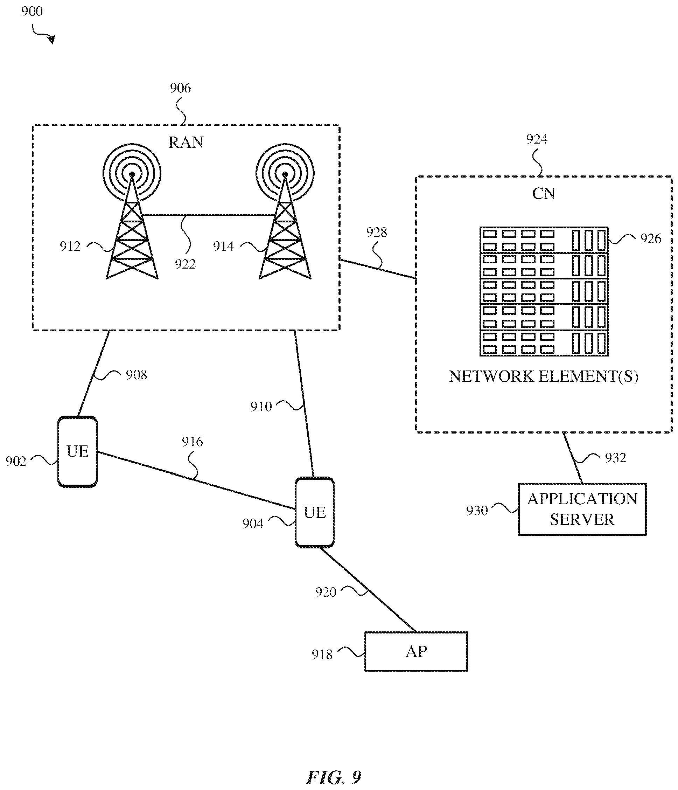

FIG. 9 illustrates an example architecture of a wireless communication system 900, according to embodiments disclosed herein. The following description is provided for an example wireless communication system 900 that operates in conjunction with the LTE system standards and/or 5G or NR system standards as provided by 3GPP technical specifications.

As shown by FIG. 9, the wireless communication system 900 includes UE 902 and UE 904 (although any number of UEs may be used). In this example, the UE 902 and the UE 904 are illustrated as smartphones (e.g., handheld touchscreen mobile computing devices connectable to one or more cellular networks), but may also comprise any mobile or non-mobile computing device configured for wireless communication.

The UE 902 and UE 904 may be configured to communicatively couple with a RAN 906. In embodiments, the RAN 906 may be NG-RAN, E-UTRAN, etc. The UE 902 and UE 904 utilize connections (or channels) (shown as connection 908 and connection 910, respectively) with the RAN 906, each of which comprises a physical communications interface. The RAN 906 can include one or more base stations, such as base station 912 and base station 914, that enable the connection 908 and connection 910.

In this example, the connection 908 and connection 910 are air interfaces to enable such communicative coupling, and may be consistent with RAT(s) used by the RAN 906, such as, for example, an LTE and/or NR.

In some embodiments, the UE 902 and UE 904 may also directly exchange communication data via a sidelink interface 916. The UE 904 is shown to be configured to access an access point (shown as AP 918) via connection 920. By way of example, the connection 920 can comprise a local wireless connection, such as a connection consistent with any IEEE 802.11 protocol, wherein the AP 918 may comprise a Wi-Fi^{®} router. In this example, the AP 918 may be connected to another network (for example, the Internet) without going through a CN 924.

In embodiments, the UE 902 and UE 904 can be configured to communicate using orthogonal frequency division multiplexing (OFDM) communication signals with each other or with the base station 912 and/or the base station 914 over a multicarrier communication channel in accordance with various communication techniques, such as, but not limited to, an orthogonal frequency division multiple access (OFDMA) communication technique (e.g., for downlink communications) or a single carrier frequency division multiple access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, all or parts of the base station 912 or base station 914 may be implemented as one or more software entities running on server computers as part of a virtual network. In addition, or in other embodiments, the base station 912 or base station 914 may be configured to communicate with one another via interface 922. In embodiments where the wireless communication system 900 is an LTE system (e.g., when the CN 924 is an EPC), the interface 922 may be an X2 interface. The X2 interface may be defined between two or more base stations (e.g., two or more eNBs and the like) that connect to an EPC, and/or between two eNBs connecting to the EPC. In embodiments where the wireless communication system 900 is an NR system (e.g., when CN 924 is a 5GC), the interface 922 may be an Xn interface. The Xn interface is defined between two or more base stations (e.g., two or more gNBs and the like) that connect to 5GC, between a base station 912 (e.g., a gNB) connecting to 5GC and an eNB, and/or between two eNBs connecting to 5GC (e.g., CN 924).

The RAN 906 is shown to be communicatively coupled to the CN 924. The CN 924 may comprise one or more network elements 926, which are configured to offer various data and telecommunications services to customers/subscribers (e.g., users of UE 902 and UE 904) who are connected to the CN 924 via the RAN 906. The components of the CN 924 may be implemented in one physical device or separate physical devices including components to read and execute instructions from a machine-readable or computer-readable medium (e.g., a non-transitory machine-readable storage medium).

In embodiments, the CN 924 may be an EPC, and the RAN 906 may be connected with the CN 924 via an S1 interface 928. In embodiments, the S1 interface 928 may be split into two parts, an S1 user plane (S1-U) interface, which carries traffic data between the base station 912 or base station 914 and a serving gateway (S-GW), and the S1-MME interface, which is a signaling interface between the base station 912 or base station 914 and mobility management entities (MMEs).

In embodiments, the CN 924 may be a 5GC, and the RAN 906 may be connected with the CN 924 via an NG interface 928. In embodiments, the NG interface 928 may be split into two parts, an NG user plane (NG-U) interface, which carries traffic data between the base station 912 or base station 914 and a user plane function (UPF), and the S1 control plane (NG-C) interface, which is a signaling interface between the base station 912 or base station 914 and access and mobility management functions (AMFs).

Generally, an application server 930 may be an element offering applications that use internet protocol (IP) bearer resources with the CN 924 (e.g., packet switched data services). The application server 930 can also be configured to support one or more communication services (e.g., VoIP sessions, group communication sessions, etc.) for the UE 902 and UE 904 via the CN 924. The application server 930 may communicate with the CN 924 through an IP communications interface 932.

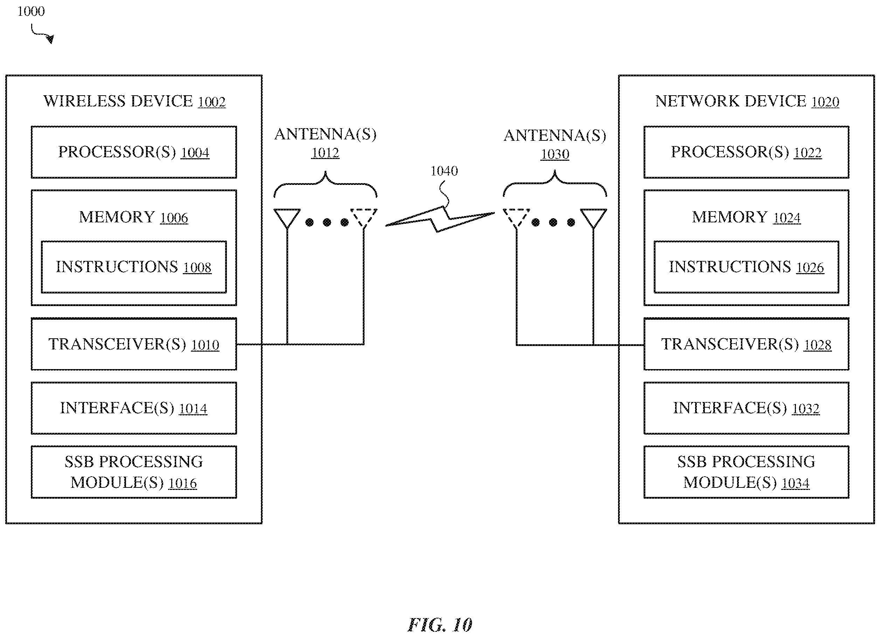

FIG. 10 illustrates a system 1000 for performing signaling 1038 between a wireless device 1002 and a network device 1020, according to embodiments disclosed herein. The system 1000 may be a portion of a wireless communications system as herein described. The wireless device 1002 may be, for example, a UE of a wireless communication system. The network device 1020 may be, for example, a base station (e.g., an eNB or a gNB) of a wireless communication system.

The wireless device 1002 may include one or more processor(s) 1004. The processor(s) 1004 may execute instructions such that various operations of the wireless device 1002 are performed, as described herein. The processor(s) 1004 may include one or more baseband processors implemented using, for example, a central processing unit (CPU), a digital signal processor (DSP), an application specific integrated circuit (ASIC), a controller, a field programmable gate array (FPGA) device, another hardware device, a firmware device, or any combination thereof configured to perform the operations described herein.

The wireless device 1002 may include a memory 1006. The memory 1006 may be a non-transitory computer-readable storage medium that stores instructions 1008 (which may include, for example, the instructions being executed by the processor(s) 1004). The instructions 1008 may also be referred to as program code or a computer program. The memory 1006 may also store data used by, and results computed by, the processor(s) 1004.

The wireless device 1002 may include one or more transceiver(s) 1010 that may include radio frequency (RF) transmitter and/or receiver circuitry that use the antenna(s) 1012 of the wireless device 1002 to facilitate signaling (e.g., the signaling 1038) to and/or from the wireless device 1002 with other devices (e.g., the network device 1020) according to corresponding RATs.

The wireless device 1002 may include one or more antenna(s) 1012 (e.g., one, two, four, or more). For embodiments with multiple antenna(s) 1012, the wireless device 1002 may leverage the spatial diversity of such multiple antenna(s) 1012 to send and/or receive multiple different data streams on the same time and frequency resources. This behavior may be referred to as, for example, multiple input multiple output (MIMO) behavior (referring to the multiple antennas used at each of a transmitting device and a receiving device that enable this aspect). MIMO transmissions by the wireless device 1002 may be accomplished according to precoding (or digital beamforming) that is applied at the wireless device 1002 that multiplexes the data streams across the antenna(s) 1012 according to known or assumed channel characteristics such that each data stream is received with an appropriate signal strength relative to other streams and at a desired location in the spatial domain (e.g., the location of a receiver associated with that data stream). Certain embodiments may use single user MIMO (SU-MIMO) methods (where the data streams are all directed to a single receiver) and/or multi user MIMO (MU-MIMO) methods (where individual data streams may be directed to individual (different) receivers in different locations in the spatial domain).

In certain embodiments having multiple antennas, the wireless device 1002 may implement analog beamforming techniques, whereby phases of the signals sent by the antenna(s) 1012 are relatively adjusted such that the (joint) transmission of the antenna(s) 1012 can be directed (this is sometimes referred to as beam steering).

The wireless device 1002 may include one or more interface(s) 1014. The interface(s) 1014 may be used to provide input to or output from the wireless device 1002. For example, a wireless device 1002 that is a UE may include interface(s) 1014 such as microphones, speakers, a touchscreen, buttons, and the like in order to allow for input and/or output to the UE by a user of the UE. Other interfaces of such a UE may be made up of transmitters, receivers, and other circuitry (e.g., other than the transceiver(s) 1010/antenna(s) 1012 already described) that allow for communication between the UE and other devices and may operate according to known protocols (e.g., Wi-Fi^{®}, Bluetooth^{®}, and the like).

The wireless device 1002 may include one or SSB processing modules 1016. The SSB processing module(s) 1016 may be implemented via hardware, software, or combinations thereof. For example, the SSB processing module(s) 1016 may be implemented as a processor, circuit, and/or instructions 1008 stored in the memory 1006 and executed by the processor(s) 1004. In some examples, the SSB processing module(s) 1016 may be integrated within the processor(s) 1004 and/or the transceiver(s) 1010. For example, the SSB processing module(s) 1016 may be implemented by a combination of software components (e.g., executed by a DSP or a general processor) and hardware components (e.g., logic gates and circuitry) within the processor(s) 1004 or the transceiver(s) 1010.

The SSB processing module(s) 1016 may be used for various aspects of the present disclosure, for example, aspects of FIG. 1 through FIG. 8. The SSB processing module(s) 1016 may be configured to, for example, identify a change in beam pattern for SSBs transmitted by another device (e.g., the network device 1020), and manage signaling and processes that are dependent on the change in beam pattern.

The network device 1020 may include one or more processor(s) 1022. The processor(s) 1022 may execute instructions such that various operations of the network device 1020 are performed, as described herein. The processor(s) 1004 may include one or more baseband processors implemented using, for example, a CPU, a DSP, an ASIC, a controller, an FPGA device, another hardware device, a firmware device, or any combination thereof configured to perform the operations described herein.

The network device 1020 may include a memory 1024. The memory 1024 may be a non-transitory computer-readable storage medium that stores instructions 1026 (which may include, for example, the instructions being executed by the processor(s) 1022). The instructions 1026 may also be referred to as program code or a computer program. The memory 1024 may also store data used by, and results computed by, the processor(s) 1022.

The network device 1020 may include one or more transceiver(s) 1028 that may include RF transmitter and/or receiver circuitry that use the antenna(s) 1030 of the network device 1020 to facilitate signaling (e.g., the signaling 1038) to and/or from the network device 1020 with other devices (e.g., the wireless device 1002) according to corresponding RATs.

The network device 1020 may include one or more antenna(s) 1030 (e.g., one, two, four, or more). In embodiments having multiple antenna(s) 1030, the network device 1020 may perform MIMO, digital beamforming, analog beamforming, beam steering, etc., as has been described.

The network device 1020 may include one or more interface(s) 1032. The interface(s) 1032 may be used to provide input to or output from the network device 1020. For example, a network device 1020 that is a base station may include interface(s) 1032 made up of transmitters, receivers, and other circuitry (e.g., other than the transceiver(s) 1028/antenna(s) 1030 already described) that enables the base station to communicate with other equipment in a core network, and/or that enables the base station to communicate with external networks, computers, databases, and the like for purposes of operations, administration, and maintenance of the base station or other equipment operably connected thereto.

The network device 1020 may include one or more SSB processing modules 1034. The SSB processing module(s) 1034 may be implemented via hardware, software, or combinations thereof. For example, the SSB processing module(s) 1034 may be implemented as a processor, circuit, and/or instructions 1026 stored in the memory 1024 and executed by the processor(s) 1022. In some examples, the SSB processing module(s) 1034 may be integrated within the processor(s) 1022 and/or the transceiver(s) 1028. For example, the SSB processing module(s) 1034 may be implemented by a combination of software components (e.g., executed by a DSP or a general processor) and hardware components (e.g., logic gates and circuitry) within the processor(s) 1022 or the transceiver(s) 1028.

The SSB processing module(s) 1034 may be used for various aspects of the present disclosure, for example, aspects of FIG. 1 through FIG. 8. The SSB processing module(s) 1034 may be configured to, for example, determine when to change a beam pattern for transmitting SSBs, and how and when to provide signaling related to the change to other devices (e.g., to the wireless device 1002).

For one or more embodiments, at least one of the components set forth in one or more of the preceding figures may be configured to perform one or more operations, techniques, processes, and/or methods as set forth herein. For example, a baseband processor as described herein in connection with one or more of the preceding figures may be configured to operate in accordance with one or more of the examples set forth herein. For another example, circuitry associated with a UE, base station, network element, etc. as described above in connection with one or more of the preceding figures may be configured to operate in accordance with one or more of the examples set forth herein.

Any of the above described embodiments may be combined with any other embodiment (or combination of embodiments), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Embodiments and implementations of the systems and methods described herein may include various operations, which may be embodied in machine-executable instructions to be executed by a computer system. A computer system may include one or more general-purpose or special-purpose computers (or other electronic devices). The computer system may include hardware components that include specific logic for performing the operations or may include a combination of hardware, software, and/or firmware.

It should be recognized that the systems described herein include descriptions of specific embodiments. These embodiments can be combined into single systems, partially combined into other systems, split into multiple systems or divided or combined in other ways. In addition, it is contemplated that parameters, attributes, aspects, etc. of one embodiment can be used in another embodiment. The parameters, attributes, aspects, etc. are merely described in one or more embodiments for clarity, and it is recognized that the parameters, attributes, aspects, etc. can be combined with or substituted for parameters, attributes, aspects, etc. of another embodiment unless specifically disclaimed herein.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Although the foregoing has been described in some detail for purposes of clarity, it will be apparent that certain changes and modifications may be made without departing from the principles thereof. It should be noted that there are many alternative ways of implementing both the processes and apparatuses described herein. Accordingly, the present embodiments are to be considered illustrative and not restrictive, and the description is not to be limited to the details given herein, but may be modified within the scope of the appended claims.

## Claims

1. An apparatus for a base station comprising a processor (1022) and a memory (1024) coupled to the processor (1022), the processor configured to:
transmit (502) a first synchronization signal block, SSB, burst including a first set of SSBs, the first set of SSBs transmitted on a first set of beams (702) having a first beam pattern;
signal (504) a change in beam pattern for transmitted SSBs, the change in beam pattern signaled before or during transmission of a second SSB burst;
select at least one set of aperiodic channel state information reference signals, CSI-RS, quasi-co-located with a SSB in the second SSB burst, the at least one set of aperiodic CSI-RS selected from among,
a first set of aperiodic CSI-RS to enable faster time/frequency offset tracking by one or more user equipment, UEs;
a second set of aperiodic CSI-RS to enable faster beam tracking by one or more UEs; and
a third set of aperiodic CSI-RS to enable faster pathloss measurement by one or more UEs;
transmit, to one or more UEs, the at least one set of aperiodic CSI-RS; and
transmit (506) the second SSB burst, the second SSB burst including a second set of SSBs transmitted on a second set of beams having a second beam pattern, the second set of beams having a different number of beams than the first set of beams, and the second set of SSBs having a different number of SSBs than the first set of SSBs.

2. The apparatus of claim 1, wherein the second set of beams includes wider beams than the first set of beams.

3. The apparatus of claim 1 or claim 2, wherein the second set of beams has fewer beams than the first set of beams, and the second set of SSBs has fewer SSBs than the first set of SSBs.

4. The apparatus of any of claims 1 to 3, wherein the processor is configured to signal the change in beam pattern for transmitted SSBs by signaling, in a system information block, SIB, or in dedicated radio resource control, RRC, signaling, a new SSB pattern within an SSB burst.

5. The apparatus of any of claims 1 to 3, wherein the processor is configured to signal the change in beam pattern for transmitted SSBs in a system information block, SIB, or in dedicated radio resource control, RRC, signaling.

6. The apparatus of claim 5, wherein the change in beam pattern is indicated by a bitmap, the bitmap including a bit per SSB in a set of multiple SSB, and each bit indicating whether a beam has changed for a corresponding SSB.

7. The apparatus of any of claims 1 to 3, wherein the processor is configured to signal the change in beam pattern for transmitted SSBs in a medium access control, MAC, control element, CE.

8. The apparatus of claim 7, wherein the processor is configured to provide, in the MAC CE, a per SSB transmission status.

9. The apparatus of claim 7, wherein the processor is configured to indicate, in the MAC CE, a cell associated with the change in beam pattern.

10. The apparatus of any of claims 1 to 3, wherein the processor is configured to signal the change in beam pattern for transmitted SSBs in group-cast downlink control information, DCI.

11. The apparatus of claim 10, wherein:
the processor is configured to associate the group-cast DCI with an SSB radio network temporary identifier, SSB-RNTI,; and
a value for the SSB-RNTI is predefined or configured by radio resource control, RRC, signaling transmitted by the processor.

12. The apparatus of any of claims 1 to 11, wherein:
the change in beam pattern for transmitted SSBs is signaled before the second SSB burst; and
an action delay for the change in beam pattern for transmitted SSBs is predefined as a next frame, or a next SSB burst, after the change in beam pattern for transmitted SSBs is signaled.

13. The apparatus of any of claims 1 to 11, wherein an action delay for the change in beam pattern for transmitted SSBs is predefined as an action delay for a system information block, SIB, update.

14. The apparatus of any of claims 1 to 11, wherein:
the processor is configured to,
configure an action delay for the change in beam pattern for transmitted SSBs; and
signal the action delay in radio resource control, RRC, signaling, a medium access control, MAC, control element, CE, or downlink control information, DCI.

15. The apparatus of claim 14, wherein:
the processor is configured to,
receive user equipment, UE, capability information indicating, for each of one or more UEs, a minimum action delay; and
configure the action delay in response to the UE capability information.

## Patentansprüche

1. Eine Vorrichtung für eine Basisstation, umfassend einen Prozessor (1022) und einen Speicher (1024), der mit dem Prozessor (1022) gekoppelt ist, wobei der Prozessor konfiguriert ist zum:
Senden (502) eines ersten Synchronisationssignalblock-, SSB-, Bursts,
der einen ersten Satz von SSBs beinhaltet, wobei der erste Satz von SSBs auf einem ersten Satz von Strahlen (702) mit einem ersten Strahlmuster gesendet wird;
Signalisieren (504) einer Änderung des Strahlmusters für gesendete SSBs, wobei die Änderung des Strahlmusters vor oder während der Sendung eines zweiten SSB-Bursts signalisiert wird;
Auswählen mindestens eines Satzes von aperiodischen Kanalzustandsinformations-Referenzsignalen, CSI-RS, quasicolokalisiert mit einem SSB in dem zweiten SSB-Burst, wobei der mindestens eine Satz von aperiodischen CSI-RS aus einem ersten Satz von aperiodischen CSI-RS ausgewählt wird, um eine schnellere Zeit-/Frequenzversatzverfolgung durch ein oder mehrere Benutzergeräte, UEs, zu ermöglichen;
einem zweiten Satz von aperiodischen CSI-RS, um eine schnellere Strahlverfolgung durch ein oder mehrere UEs zu ermöglichen; und
einem dritten Satz von aperiodischen CSI-RS, um eine schnellere Pfadverlustmessung durch ein oder mehrere UEs zu ermöglichen; Senden, an ein oder mehrere UEs, des mindestens einen Satzes von aperiodischen CSI-RS; und
Senden (506) des zweiten SSB-Bursts, wobei der zweite SSB-Burst einen zweiten Satz von SSBs beinhaltet, die auf einem zweiten Satz von Strahlen mit einem zweiten Strahlmuster gesendet werden, wobei der zweite Satz von Strahlen eine andere Anzahl von Strahlen als der erste Satz von Strahlen hat und der zweite Satz von SSBs eine andere Anzahl von SSBs als der erste Satz von SSBs hat.

2. Die Vorrichtung nach Anspruch 1, wobei der zweite Satz von Strahlen breitere Strahlen als der erste Satz von Strahlen beinhaltet.

3. Die Vorrichtung nach Anspruch 1 oder Anspruch 2, wobei der zweite Satz von Strahlen weniger Strahlen als der erste Satz von Strahlen hat und der zweite Satz von SSBs weniger SSBs als der erste Satz von SSBs hat.

4. Die Vorrichtung nach einem der Ansprüche 1 bis 3, wobei der Prozessor konfiguriert ist zum Signalisieren der Änderung des Strahlmusters für gesendete SSBs durch Signalisieren, in einem Systeminformationsblock, SIB, oder in dedizierter Funkressourcensteuerungs-, RRC-, Signalisierung, eines neuen SSB-Musters innerhalb eines SSB-Bursts.

5. Die Vorrichtung nach einem der Ansprüche 1 bis 3, wobei der Prozessor konfiguriert ist zum Signalisieren der Änderung des Strahlmusters für gesendete SSBs in einem Systeminformationsblock, SIB, oder in dedizierter Funkressourcensteuerungs-, RRC-, Signalisierung.

6. Die Vorrichtung nach Anspruch 5, wobei die Änderung des Strahlmusters durch eine Bitmap angezeigt wird, wobei die Bitmap ein Bit pro SSB in einem Satz von mehreren SSBS beinhaltet und jedes Bit anzeigt, ob sich ein Strahl für einen entsprechenden SSB geändert hat.

7. Die Vorrichtung nach einem der Ansprüche 1 bis 3, wobei der Prozessor konfiguriert ist zum Signalisieren der Änderung des Strahlmusters für gesendete SSBs in einem Medienzugriffssteuerungs-, MAC-, Steuerelement, CE.

8. Die Vorrichtung nach Anspruch 7, wobei der Prozessor konfiguriert ist zum Bereitstellen, in dem MAC-CE, eines Pro-SSB-Sendestatus.

9. Die Vorrichtung nach Anspruch 7, wobei der Prozessor konfiguriert ist zum Anzeigen, in dem MAC-CE, einer Zelle, die mit der Änderung des Strahlmusters assoziiert ist.

10. Die Vorrichtung nach einem der Ansprüche 1 bis 3, wobei der Prozessor konfiguriert ist zum Signalisieren der Änderung des Strahlmusters für gesendete SSBs in Gruppensendung-Downlink-Steuerinformation, DCI.

11. Die Vorrichtung nach Anspruch 10, wobei:
der Prozessor konfiguriert ist zum Assoziieren der Gruppensendung-DCI mit einer temporären SSB-Funknetzwerkkennung, SSB-RNTI; und
ein Wert für die SSB-RNTI vordefiniert ist oder konfiguriert ist durch Funkressourcensteuerungs-, RRC-, Signalisierung, die durch den Prozessor gesendet wird.

12. Die Vorrichtung nach einem der Ansprüche 1 bis 11, wobei:
die Änderung im Strahlmuster für gesendete SSBs vor dem zweiten SSB-Burst signalisiert wird; und
eine Aktionsverzögerung für die Änderung im Strahlmuster für gesendete SSBs als ein nächster Rahmen oder ein nächster SSB-Burst vordefiniert ist, nachdem die Änderung im Strahlmuster für gesendete SSBs signalisiert wird.

13. Die Vorrichtung nach einem der Ansprüche 1 bis 11, wobei eine Aktionsverzögerung für die Änderung im Strahlmuster für gesendete SSBs als eine Aktionsverzögerung für eine Systeminformationsblock-, SIB-, Aktualisierung vordefiniert ist.

14. Die Vorrichtung nach einem der Ansprüche 1 bis 11, wobei:
der Prozessor konfiguriert ist zum:
Konfigurieren einer Aktionsverzögerung für die Änderung im Strahlmuster für gesendete SSBs; und
Signalisieren der Aktionsverzögerung in Funkressourcensteuerungs-, RRC-, Signalisierung, einem Medienzugriffssteuerungs-, MAC-, Steuerelement, CE, oder Downlink-Steuerinformation, DCI.

15. Die Vorrichtung nach Anspruch 14, wobei:
der Prozessor konfiguriert ist zum:
Empfangen von Benutzergerät-, UE-, Fähigkeitsinformation, die für jedes von einem oder mehreren UEs eine minimale Aktionsverzögerung anzeigt; und
Konfigurieren der Aktionsverzögerung als Reaktion auf die UE-Fähigkeitsinformation.

## Revendications

1. Un appareil pour une station de base comprenant un processeur (1022) et une mémoire (1024) couplée au processeur (1022), le processeur étant configuré pour :
transmettre (502) une première salve de blocs de signal de synchronisation, SSB, incluant un premier ensemble de SSB, le premier ensemble de SSB transmis sur un premier ensemble de faisceaux (702) ayant un premier diagramme de faisceau ;
signaler (504) un changement de diagramme de faisceau pour les SSB transmis, le changement de diagramme de faisceau étant signalé avant ou pendant la transmission d'une seconde salve de SSB ;
sélectionner au moins un ensemble de signaux de référence d'information d'état de canal, CSI-RS, apériodiques quasi-colocalisés avec un SSB dans la seconde salve de SSB, l'au moins un ensemble de CSI-RS apériodiques étant sélectionné parmi :
un premier ensemble de CSI-RS apériodiques pour permettre un suivi de décalage temps/fréquence plus rapide par un ou plusieurs équipements utilisateurs, UE ;
un second ensemble de CSI-RS apériodiques pour permettre un suivi de faisceau plus rapide par un ou plusieurs UE ; et
un troisième ensemble de CSI-RS apériodiques pour permettre une mesure d'affaiblissement sur le trajet plus rapide par un ou plusieurs UE ;
transmettre, à un ou plusieurs UE, l'au moins un ensemble de CSI-RS apériodiques ; et
transmettre (506) la seconde salve de SSB, la seconde salve de SSB incluant un second ensemble de SSB transmis sur un second ensemble de faisceaux ayant un second diagramme de faisceau, le second ensemble de faisceaux ayant un nombre différent de faisceaux par rapport au premier ensemble de faisceaux, et le second ensemble de SSB ayant un nombre différent de SSB par rapport au premier ensemble de SSB.

2. L'appareil selon la revendication 1, dans lequel le second ensemble de faisceaux inclut des faisceaux plus larges que le premier ensemble de faisceaux.

3. L'appareil selon la revendication 1 ou la revendication 2, dans lequel le second ensemble de faisceaux a moins de faisceaux que le premier ensemble de faisceaux, et le second ensemble de SSB a moins de SSB que le premier ensemble de SSB.

4. L'appareil selon l'une des revendications 1 à 3, dans lequel le processeur est configuré pour signaler le changement de diagramme de faisceau pour les SSB transmis en signalant, dans un bloc d'informations système, SIB, ou dans une signalisation de contrôle de ressource radio, RRC, dédiée, un nouveau profil SSB à l'intérieur d'une salve de SSB.

5. L'appareil selon l'une des revendications 1 à 3, dans lequel le processeur est configuré pour signaler le changement de diagramme de faisceau pour les SSB transmis dans un bloc d'informations système, SIB, ou dans une signalisation de contrôle de ressource radio, RRC, dédiée.

6. L'appareil selon la revendication 5, dans lequel le changement de diagramme de faisceau est indiqué par un bitmap, le bitmap incluant un bit par SSB dans un ensemble de multiples SSB, et chaque bit indiquant si un faisceau a changé pour un SSB correspondant.

7. L'appareil selon l'une des revendications 1 à 3, dans lequel le processeur est configuré pour signaler le changement de diagramme de faisceau pour les SSB transmis dans un élément de contrôle, CE, de contrôle d'accès au support, MAC.

8. L'appareil selon la revendication 7, dans lequel le processeur est configuré pour délivrer, dans le CE MAC, un état de transmission par SSB.

9. L'appareil selon la revendication 7, dans lequel le processeur est configuré pour indiquer, dans le CE MAC, une cellule associée au changement de diagramme de faisceau.

10. L'appareil selon l'une des revendications 1 à 3, dans lequel le processeur est configuré pour signaler le changement de diagramme de faisceau pour des SSB transmis dans une information de contrôle de liaison descendante, DCI, de diffusion de groupe.

11. L'appareil selon la revendication 10, dans lequel :
le processeur est configuré pour associer la DCI de diffusion de groupe à un identifiant temporaire de réseau radio SSB, SSB-RNTI, et
une valeur pour le SSB-RNTI est prédéfinie ou configurée par une signalisation de contrôle de ressources radio, RRC, transmise par le processeur.

12. L'appareil selon l'une des revendications 1 à 11, dans lequel :
le changement de diagramme de faisceau pour des SSB transmis est signalé avant la seconde salve de SSB ; et
un retard d'action pour le changement de diagramme de faisceau pour des SSB transmis est prédéfini comme une trame suivante, ou une salve de SSB suivante, après que le changement de diagramme de faisceau pour des SSB transmis est signalé.

13. L'appareil selon l'une des revendications 1 à 11, dans lequel un retard d'action pour le changement de diagramme de faisceau pour des SSB transmis est prédéfini comme un retard d'action pour une mise à jour de bloc d'informations système, SIB.

14. L'appareil selon l'une des revendications 1 à 11, dans lequel :
le processeur est configuré pour :
configurer un retard d'action pour le changement de diagramme de faisceau pour des SSB transmis ; et
signaler le retard d'action dans une signalisation de contrôle de ressources radio, RRC, un élément de contrôle, CE, de contrôle d'accès moyen, MAC, ou une information de contrôle de liaison descendante, DCI.

15. L'appareil selon la revendication 14, dans lequel :
le processeur est configuré pour :
recevoir des informations de capacité d'équipement utilisateur, UE, indiquant, pour chacun d'un ou plusieurs UE, un retard d'action minimal ; et
configurer le retard d'action en réponse aux informations de capacité UE.
